# EUROPÄISCHE PATENTANMELDUNG

(11) **EP 0 543 029 A1**
(43) Veröffentlichungstag der Anmeldung: **26.05.1993**
(21) Anmeldenummer: 91119033.8
(22) Anmeldetag: 08.11.1991
(51) Int. Cl.: A23G 1/21

(54) **Vorrichtung zur Herstellung von insbesondere hohlen Formkörpern aus einer bei Erwärmung fliessfähigen Masse**

(71) Anmelder: Gebr. Bindler Maschinenfabrik GmbH & Co. KG, D-51702 Bergneustadt (DE)
(72) Erfinder: Bindler, Uwe, Dipl.-Ing., W-5275 Bergneustadt (DE)
(74) Vertreter: Cohausz & Florack Patentanwälte

(57) **Zusammenfassung**

@ Eine Vorrichtung zur Herstellung von hohlen Formkörpern aus einer im erwärmten Zustand fließ - fähigen Masse wird dahingehend verbessert werden, daß ein Betrieb mit möglichst geringem mechani - schem Aufwand erfolgt.

Dies wird dadurch erreicht, daß Formen 10 in verschiebbaren Haltern 1 gehalten sind, von denen jeder zur Erzeugung der Drehbewegungen ein Getriebe 4 aufweist, und daß jedes dieser Getriebe 4 mit seinem Eingangsglied 3 an ein sich von der Eingangs - 2 bis zur Ausgangsstation 3 erstrecken - de Abtriebsglied 5 eines Drehantriebs in der Ein - gangsstation 2 ankuppelbar und in der Ausgangs - station 6 abkuppelbar ist.

## Beschreibung

Die Erfindung betrifft eine Vorrichtung zur Herstellung von hohlen Formkörpern aus einer bei Erwärmung fließfähigen Masse, insbesondere Schokolade, mit einer Transportbahn, auf der die mit fließfähiger Masse befüllbaren Formen von ei - ner Eingangsstation durch eine Kühlstation, in der die Formen eine Drehbewegung um mehrere Achsen ausführen, und eine Ausgangsstation transportierbar sind.

Bekannte Vorrichtungen, die nach diesem Funktionsprinzip arbeiten, haben den Nachteil, daß sie fest an einer umlaufenden Transportkette montiert sind und somit für hochflexible Lösungen zu kostenaufwendig sind.

Aufgabe der Erfindung ist es daher eine Vorrichtung zur Herstellung von Formkörpern aus bei Erwärmung fließfähiger Masse zu schaffen, die mit möglichst geringem mechanischen Aufwand realisierbar ist.

Diese Aufgabe wird erfindungsgemäß dadurch gelöst, daß die mit der erwärmten, fließfähigen Masse gefüllten Formen in schiebbaren Haltern gehalten sind, von denen jeder zur Erzeugung der Drehbewegungen ein Getriebe aufweist, und daß jedes dieser Getriebe mit seinem Eingangsglied an ein sich von der Eingangs- bis zur Ausgangsstation erstreckendes Abtriebsglied eines für alle Halter gemeinsamen Drehantriebs in der Ein - gangsstation ankuppelbar und in der Ausgangs - station abkuppelbar ist.

Durch den für alle Halter gemeinsamen Dreh - antrieb wird der zur Erzeugung der Drehbewegung erforderliche mechanische Aufwand erheblich ver - ringert. Dabei ist es besonders günstig, daß das Abtriebsglied des für alle Halter gemeinsamen Antriebs eine Drehbewegung ausführt und diese Drehbewegung direkt in die Schwenkbewegung der Formen als Drehung um mehrere Achsen überführt wird.

Ein besonders einfacher und preisgünstiger Aufbau der Vorrichtung wird durch die Verwendung einer Reibwelle oder einer Welle mit friktionsunterstützender Oberfläche als Abtriebsglied des Drehantriebs erzielt. Das Ankuppeln des Ein - gangsgliedes der an den Haltern angeordneten Getriebe an eine solche Reibstange ist besonders einfach.

Die zum Schieben der Heiter erforderliche Vorschubkraft und der Verschleiß des Abtriebs - gliedes des Drehantriebs läßt sich durch die Ver - wendung einer Zahnradwelle vermindern, über die das Getriebe eines jeden Halters während des Transports mittels eines Zahnradgetriebes an - treibbar ist.

Für ein vollständiges Ausschwenken der Formen sind Drehbewegungen um zwei Achsen notwendig. Dabei ergibt sich eine besonders platzsparende Ausbildung des Getriebes, wenn die Drehachsen senkrecht aufeinander stehen. Auf diese Weise läßt sich aus wenigen Elementen ein Schwenkgetriebe aufbauen, bei dem das Eingangsglied des Getriebes eines jeden Halters ein von dem Antriebsglied des Drehantriebs getriebener, drehbar gelagerter Ring ist, in dem eine Achse für ein Kegelrad befestigt ist, das auf einem stillstehenden, konzentrisch zu dem Ring angeordneten Kegelkranz abrollt und an dem ein Gehäuse zur Aufnahme der Formen drehfest befestigt ist.

Eine besonders raumsparende Bauform des Getriebes läßt sich erzielen, wenn der als Eingangsglied arbeitende, drehbare Ring in einer Dreipunktlagerung an drei äußeren Wälzlagern an seinem Umfang gelagert ist, Dadurch bleiben die in dem Halter gehaltenen Formen zudem jederzeit zugänglich.

Weisen die Halter eine Öffnung auf, durch die ein durch ein Gebläse in die Vorrichtung eingeblasener Luftstrom strömt und dabei die Formen umströmt, so lassen sich die Formen besonders wirksam kühlen. Die Kühlung erfolgt vorzugsweise im Gegenstrom.

Ein besonders einfacher Aufbau eines solchen Halters ergibt sich, wenn der Halter als kastenförmiger, offener Rahmen ausgebildet ist.

Die Luftströmung wird begünstigt, wenn die Halter aneinanderliegend mittels eines Schubantriebs als Schubverband durch die Vorrichtung befördert werden und sich durch die aneinanderliegenden Öffnungen ein Kanal bildet, durch den die Kühlluft strömt.

Im folgenden soll die Erfindung anhand einer ein Ausführungsbeispiel schematisch darstellenden Zeichnung erläutert werden.

Es zeigen:

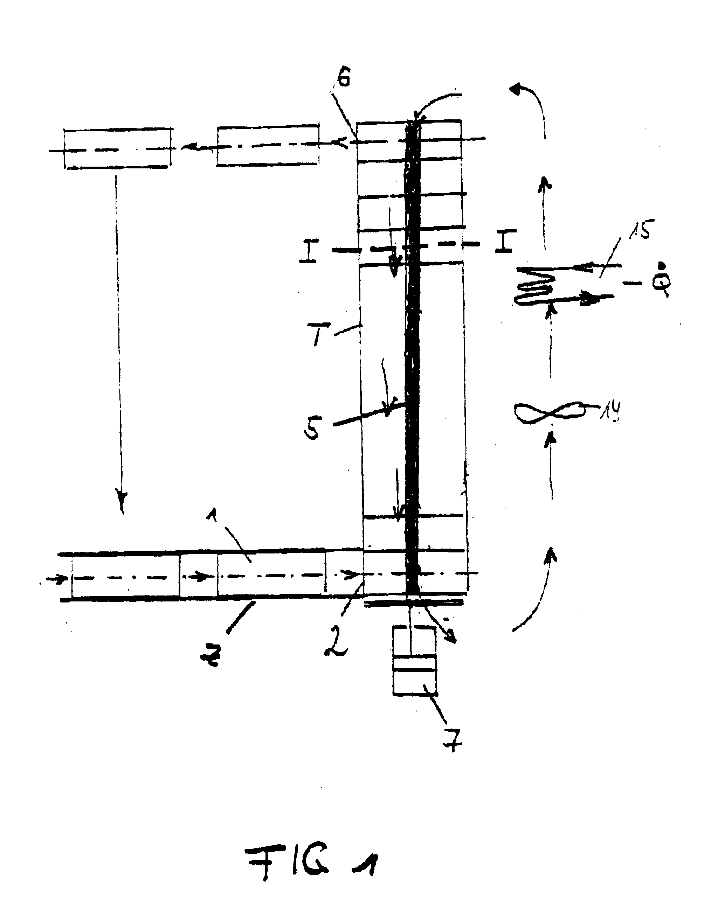

Fig. 1 die Vorrichtung in Aufsicht

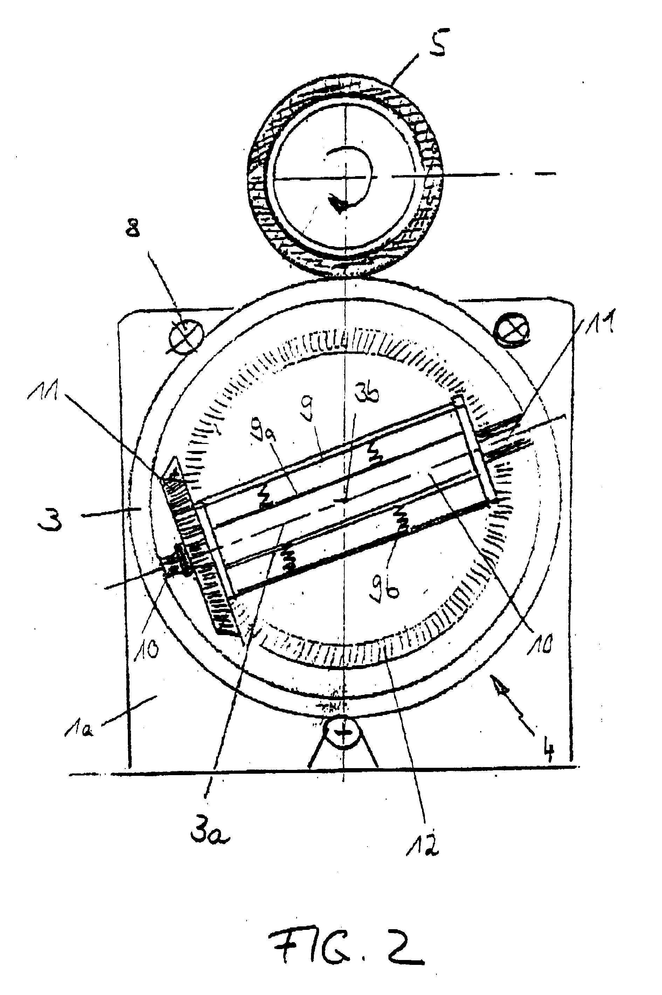

Fig. 2 die Vorrichtung gemäß Fig. 1 in einem Schnitt entlang der Schnittlinie I - I in Fig. 1,

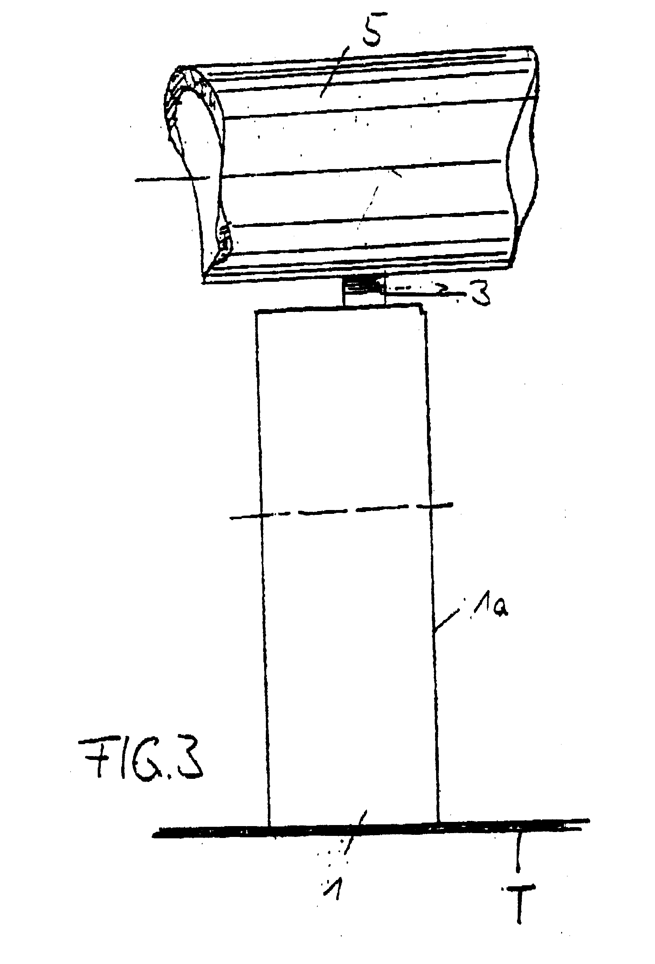

Fig. 3 die Vorrichtung gemäß Fig. 1 in einer seitlichen Teilansicht.

Als kastenartige, offene Rahmen ausgebildete Halter 1, in denen die mit erwärmter, fließfähiger Masse befüllten Formen gehalten sind, werden auf einer Zuführung Z zu einer Eingangsstation 2 der Vorrichtung befördert und in diese eingeschoben. Während des Einschiebens wird ein als Eingangs - glied wirkender Ring 3 eines an jedem Halter 1 angebrachten Getriebes 4 an eine Reibwelle 5 an - gekuppelt, die sich von der Eingangsstation 2 bis zu einer Ausgangsstation 6 der Vorrichtung erstreckt.

Zur verschleißgünstigen Übertragung des Drehung auf das Getriebe 4 weist der äußere Ring des Getriebes 4 einen glatten Außenrand auf und ist in drei um jeweils 120° versetzten Wälzlagern 8 gehalten.

Entlang der Durchmesserlinie 3a des Ringes 3 wird ein Gehäuse 9 durch Lager 10,11 drehbar in dem Ring 3 gehalten. Es weist Platten 9a auf, durch die mittels Federn 9b die mit der erwärmten, fließfähigen Masse gefüllten Formen 10 in dem Gehäuse 9 gehalten werden.

An seinem einen Ende ist das Gehäuse 9 drehfest mit einem Kegelrad 11 verbunden. Dieses Kegelrad 11 rollt auf einem ortsfesten Kegelkranz 12 ab, der konzentrisch zu dem Ring 8 auf der Seitenfläche 1 des Halters angeordnet ist. Durch die Drehung des Ringes 3 und des Gehäuses 9 führen die mit der fließfähigen Masse gefüllten Formen 10 eine räumliche Schwenkbewegung um die Drehachse 3b des Ringes 3 und um die Durchmesserlinie 3a des Ringes 3 aus.

Der Halter 1 weist konzentrisch zu dem Ring 3 eine kreisförmige, mittigen Öffnung auf, die durch den Kegelkranz 12 begrenzt ist

Mit dem Einschieben des Halters 1 in die Vorrichtung wird der Ring 3 des Getriebes 4 in Drehung versetzt. Gleichzeitig rollt das Kegelrad 11 auf dem Kegelkranz 12 ab, so daß das Gehäuse 9 eine Drehung um zwei senkrecht aufeinanderstehenden Achsen ausführt. Dabei ist die Geschwindigkeit dieser Drehung um die beiden Drehachsen bezogen auf die Umfangsgeschwindigkeit des Ringes 8 abhängig von der Größe des Kegelrades 13 und des Durchmessers des Kegelkranzes 14.

Nach dem Einschieben der Halter schiebt der Schubantrieb 7 die Halter 1 aneinanderanliegend entlang der Reibwelle 5 durch die Vorrichtung zu der Ausgangsstation Dabei bildet sich durch die aneinander angrenzenden Öffnungen 13 ein Kanal, durch den kühlende Luft strömt. Die Luft wird in einem Umluftsystem durch die Formenrahmen geführt. Anschließend wird die nun erwärmte Luft durch einen Kühler 15 gekühlt und durch das Gebläse wieder in die Eingangsstation 2 der Vorrich - tung eingeblasen.

Sobald die Halter 1 die Ausgangsstation 6 erreicht haben, werden sie seitlich aus der Vorrich - tung herausgeschoben und dabei die Reibverbin - dung zwischen der Reibstange 5 und dem Ring 3 gelöst.

## Patentansprüche

1. Vorrichtung zur Herstellung von hohlen Formkörpern aus einer bei Erwärmung fließfähigen Masse, insbesondere Schokolade, mit einer Transportbahn (T), auf der die mit fließfähiger Masse befüllbaren Formen (10) von einer Eingangsstation (2) durch eine Kühlstation, in der die Formen (10) eine Drehbewegung um mehrere Achsen ausführen und eine Ausgangsstation (6) transportierbar sind, dadurch gekennzeichnet, daß die Formen (10) in verschiebbaren Haltern (1) gehalten sind, von denen jeder zur Erzeugung der Drehbewegungen ein Getriebe (4) aufweist, und daß jedes dieser Getriebe (4) mit seinem Eingangsglied (3) an ein sich von der Eingangs- (2) bis zur Ausgangsstation (3) erstreckende Abtriebsglied (5) eines für alle Halter (1) gemeinsamen Drehantriebs in der Eingangsstation (2) ankuppelbar und in der Ausgangsstation (6) abkuppelbar ist.

2. Vorrichtung nach Anspruch 1, dadurch gekennzeichnet, daß das Abtriebsglied (5) des Drehantriebs eine Reibwelle (5) oder eine Welle mit friktionsunterstützender Oberfläche ist, von der das als Reibrad ausgebildete Eingangsglied (3) des Gebtriebes (4) nach Art eines Reibradgetriebes antreibbar ist.

3. Vorrichtung nach Anspruch 1, dadurch gekennzeichnet, daß das Abtriebsglied (5) des Drehantriebs eine Zahn - radwelle ist, über die das Getriebe (4) eines jeden Halters (1) während des Transports mittels eines Zahrandgetriebes antreibbar ist.

4. Vorrichtung nach einem der vorhergehenden Ansprüche, dadurch gekennzeichnet, daß die Formen (10) eine Drehbewegung um nur zwei Drehachsen (3a,3b) ausführen.

5. Vorrichtung nach Anspruch 4, dadurch gekennzeichnet, daß die beiden Drehachsen (3a,3b) senkrecht zueinander an - geordnet sind.

6. Vorrichtung nach einem der vorhergehenden Ansprüche, dadurch gekennzeichnet, daß die Winkel - geschwindigkeiten um die Drehachsen (3a,3b) relativ zueinander unterschiedlich sind.

7. Vorrichtung nach einem der vorhergehenden Ansprüche, dadurch gekennzeichnet, daß das Eingangsglied (3) des Getriebes (4) eines jeden Halters (1) ein von dem Antriebsglied (5) des Drehantriebs getriebener, drehbar gelagerter Ring (3) ist, in dem eine Achse für ein Kegel - rad (13) befestigt ist, das auf einem stillstehenden, konzentrisch zu dem Ring (3) ange - ordneten Kegelkranz (14) abrollt und an dem ein Gehäuse (9) zur Aufnahme der Formen (10) drehfest befestigt ist.

8. Vorrichtung nach Anspruch 7, dadurch gekennzeichnet, daß der drehbare Ring (3) des Getriebes (4) eines jeden Halters (1) an seinem Umfang zwischen drei äußeren Wälzlagern (9) einer Dreipunktlagerung gelagert ist.

9. Vorrichtung nach einem der vorhergehenden Ansprüche, dadurch gekennzeichnet, daß die Halter (1) eine Öffnung (13) aufweisen, durch die ein durch ein Gebläse (14) in die Vorrichtung ein - geblasener und durch einen Kühler (15) gekühlter Luftstrom strömt und dabei die Formen (10) umströmt.

10. Vorrichtung nach einem der vorhergehenden Ansprüche, dadurch gekennzeichnet, daß die Halter (1) als kastenförmiger, offener Rahmen ausgebildet sind.

11. Vorrichtung nach einem der vorhergehenden Ansprüche, dadurch gekennzeichnet, daß die Vorrich - tung einen Schubantrieb (7) aufweist, der die Halter (1) aneinander anliegend als Schubverband durch die Vorrichtung schiebt.

12. Vorrichtung nach Anspruch 9, dadurch gekennzeichnet, daß die Kühlung im Gegenstrom erfolgt.
